Europäisches Patentamt

(19) European Patent Office

Office européen des brevets

(11) Publication number: **0 097 510**
**B1**

(12) **EUROPEAN PATENT SPECIFICATION**

(45) Date of publication of patent specification: 30.03.88

(51) Int. Cl.⁴: **G 11 B 7/24**

(21) Application number: 83303530.6

(22) Date of filing: 20.06.83

(54) Erasable optical recording medium.

(30) Priority: 21.06.82 US 390161

(43) Date of publication of application:
04.01.84 Bulletin 84/01

(45) Publication of the grant of the patent:
30.03.88 Bulletin 88/13

(84) Designated Contracting States:
BE DE FR GB IT NL

(56) References cited:
EP-A-0 003 262
EP-A-0 046 413
EP-A-0 051 281
EP-A-0 097 509
FR-A-2 452 758
US-A-3 475 760
US-A-4 175 145

The file contains technical information
submitted after the application was filed and
not included in this specification

(73) Proprietor: **CELANESE CORPORATION**
**1211 Avenue of the Americas**
**New York New York 10036 (US)**

(72) Inventor: **Kuder, James E.**
**91 Willoughby Road**
**Fanwood New Jersey (US)**
Inventor: **East, Anthony J.**
**62 Niles Avenue**
**Madison New Jersey (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

(56) References cited:

**IBM TECHNICAL DISCLOSURE BULLETIN, vol.
6, no. 2, July 1963, page 11, New York, US W.J.
KING: "High intensity light recording tape"**

Courier Press, Leamington Spa, England.

(56) References cited:
**IBM TECHNICAL DISCLOSURE BULLETIN, vol. 22, no. 8A, January 1980, page 3352, New York, US R.M. MacFARLANE et al.: "Chlorin in polystyrene: a polymeric material for reversible photo-chemical hole-burning sortage"**

**PATENTS ABSTRACTS OF JAPAN, vol. 7, no. 10(P-168)1155r, 14th January 1983 & JP-A-57167149**

**PATENTS ABSTRACTS OF JAPAN, vol. 7, no. 78 (P-188)1223r, 31st March 1983 & JP-A-589230**

## Description

This invention relate to an erasable ablative recording medium, suitable for the recording of information by means of light of predetermined frequency, as well as a method of recording information thereon and a method of erasing recorded information therefrom.

The invention therefore relates to a novel optical information recording medium and the recording of information thereon, more particularly to an information recording medium, preferably in the form of a disc, suitable for use with optical recording and playback apparatus, which recording medium is stable yet readily and accurately erasable.

EP—A—0097509 (application no. 83303529.8 having the same priority date as the present application) discloses an ablative recording medium, suitable for use with a recording laser, comprising a thermally stable substrate and a recording polymer layer coated thereon, wherein the polymer layer comprises a dimer acid polyamide having a weight average molecular weight in the range from 2,000 to 20,000.

Various optical recording media and methods for recording information thereon are known. For example, the recording of information in the form of deformations or ripples in a thermoplastic film is known, with techniques for achieving such deformations involving the steps of (1) forming a charge pattern on the surface of the thermosplastic film in accordance with the information to be recorded, (2) heating the thermoplastic film to its melting point so as to permit the electrostatic forces produced by the charges to form a deformation pattern in the thermoplastic film corresponding to the charge pattern and thus to the information to be recorded, and (3) then cooling the thermoplastic film below its melting point to fix the thus-formed deformation pattern in the film. Reading of the information represented by the deformation pattern in the thermoplastic film may be accomplished using well known optical techniques. See, e.g., U.S. Patent No: 3,952,146.

Techniques for erasing the deformation pattern involve reheating the thermoplastic film above its melting point to a significantly higher temperature than during recording in order to permit surface tension to smooth out the surface. Selective erasure may be accomplished by confining the heating to a selected area. After cooling, another deformation pattern may be recorded in the thermoplastic film.

Clemens, in U.S. Patents No: 3,842,194, 3,842,217 and 3,909,517, describes a conductive video disc comprising a moulded plastic disc having video and audio information in the form of geometric variations in a spiral groove in the disc surface. These discs are coated first with a conductive material, such as a metal, which acts as a first electrode, and then with a dielectric layer, such as an inert polymer layer. A metal-tipped stylus acts as a second electrode of a capacitor and the information signals are monitored by the stylus which notes changes in capacitance between the stylus and the disc surface as the information, in the form of depressions, passes beneath the stylus when relative motion is established between the disc and the stylus.

Optical recording methods in which light from a laser is focused upon the surface of a recording medium with sufficient intensity to cause ablation of surface material have also been proposed. In such methods, an information representative pattern of pits may be formed in the surface of the recording medium by suitably controlling the intensity of the focused light in accordance with the information to be recorded while relative motion is established between the recording medium and the focused light spot.

For instance, in recent years, attention has been increasingly paid to the information recording method in which information is written in a thin film of metal or the like formed on a substrate by using a laser ray or beam. According to such a method, the information recording has been accomplished by forming holes or recesses in the metallic thin film under the action of a thermal energy beam such as a laser ray. See, e.g., U.S. Patent No: 4,238,803.

Spong, U.S. Patent No: 4,097,895, described a recording medium which comprises a light-reflecting material, such as aluminum or gold, coated with a light-absorbing layer, such as fluorescein, which is operative with an argon laser light source. The thickness of the light-absorbing layer is chosen so that the structure has minimum reflectivity. An incident light beam than ablates, vaporises or melts the light-absorbing layer, leaving a hole and exposing the light-reflecting layer. After recording at the wavelength of the recording light, maximum contrast between the minimum reflectance of the light-absorbing layer and the reflectance of the light-reflecting exists. In this rgard, note also U.S. Patent No: 4,219,826.

Carlson, in U.S. Patent No: 3,475,760, discloses a system for directly recording information in a thermoplastic film as a deformation by using a high energy laser scanning beam of small diameter. Erasure of the film deformation is accomplished by recording over the information to be erased using a similar laser beam but with a much smaller scan line spacing, preferably so as to provide overlap of the scan lines. Suitable thermoplastic films are disclosed as being vinyltoluenebutadiene, polystyrene ortho-terphenyl, polyethylene and nitrocellulose.

The recording medium, of course, is one of the key elements in any optical and/or audio recording system, and this is particularly true in the home entertainment market where erasable recording discs would be a very desirable product, provided the recording discs could match the commercial magnetic tapes with regard to the technical parameters and the economics of a recording medium. Although many different media have been investigated for possible use in the various aforediscussed recording systems, and in particular the laser systems, a suitable recording medium or disc which is stable and economical, yet readily erasable when desired, has hitherto not been provided. Such a recording medium, and in particular if in the form of a disc, would be readily accepted and would fill a void in the video recording marketplace.

The present invention provides a significant advance in these respects.

The present invention provides a new and surprising recording medium, which is ablative and erasable (information recorded thereon may be readily erased and, if desired, other information recorded instead). The medium is an optical medium suitable for use with recording and reading beams of light of determined frequency (e.g. lasers). The medium may, for example, be in the form of a disc.

The invention involves the use of a thermally stable substrate and a recording layer coated thereon. It is a new and surprising feature of the invention to use as recording layer a polymer having the following combination of properties:

(i) a Vicat softening point of 45 to 120°C;

(ii) a surface tension and a melt viscosity in the temperature range of 140 to 200°C such that, if the surface tension is expressed in N/m (dynes/cm) and the melt viscosity is expressed in Pa (poise), then the ratio of surface tension to melt viscosity at some temperature within the said range is at least 1:50 (2:1), preferably at least 1:6.25 (8:1); and

(iii) a temperature for the onset of thermal degradation of at least 250°C, preferably at least 300°C.

This polymer is referred to herein as "the polymer" or "the said polymer".

The invention also provides a method of producing a recording by irradiating the said polymer layer of the recording medium with a recording beam of light whereby information is recorded as deformations in the said layer. The invention also provides a method of erasing such recorded information from such a recording by heating the said polymer layer, such heating being generally such as to effect levelling of the said layer in the area corresponding to the information to be erased.

The substrate may be relatively thick, and the said polymer layer may be a relatively thin layer, such as a film.

The particular multi-layer structure of the present invention has a surprising applicability as an erasable information recording medium as it has excellent dimensional and mechanical stability on storage, readily and easily records information and yet has an ability to be readily and quickly erased when erasure is desired.

The present invention makes it possible to achieve a number of significant advantages, among which are the following:

The invention provides a novel optical recording medium which is stable, yet readily erasable when desired.

The invention provides a novel erasable recording medium upon which information may be recorded as a deformation and wherein this information can easily be erased, thereby providing a blank recording medium upon which information can be recorded.

The invention provides an erasable recording medium, particularly useful for video recordings, which comprises a polymeric layer exhibiting specifically selected properties to render the recording and erasing of information from the recording medium most effective and economic.

The invention provides an erasable recording disc comprising a uniquely-suited polymer layer which enables the recording and erasing of information to be technically accurate and economically expedient.

It is preferable that the said polymer employed in the erasable recording medium of the present invention be soluble in conventional organic solvents, yet be in insoluble in water. It should also preferably be capable of forming a thin film and be optically homogeneous and non-scattering upon forming said film, and should adhere well to the substrate.

In a preferred embodiment of the present invention the layer comprising the said polymer further comprises a dye which is absorptive at the light frequency of the predetermined recording light source.

The polymers employed in the erasable recording medium of the present invention can essentially be any polymer which has the specified combination of properties. Some such polymers are commercially available. These polymers, however, have not hitherto been recognised as being particularly suitable for use in an erasable information recording medium.

The Vicat softening point of the polymer employed ranges from 45°C to 120°C, more preferably from 50°C to 100°C, and most preferably from 60°C to 80°C. The softening point is an important property in terms of the dimensional stability of the recording medium upon storage. The polymer layer, therefore, will remain dimensionally stable for normal variations in ambient temperature, and hence provide a permanent record upon storage. The Vicat softening point is generally measured in accordance with standard defined test procedures, e.g., ASTM D1525—76.

With regard to dimensional stability, the polymer of the present invention is also essentially insoluble in water so that the polymer does not swell in a humid environment. A recording disc of the present invention should thus be unaffected by normal variations in humidity.

The ratio (in m/s (cm/sec)) of surface tension (as measured in N/m (dynes/cm)) to melt viscosity (as measured in Pa.s (poise)) exhibited by the polymer is also an important property as it signifies the ability of the polymer film to be erased of information easily and with a high erasure rate, as the rate of erasure is believed to be generally proportional to the surface tension of the polymer and inversely proportional to the melt viscosity of the polymer at the temperature of erasure. Conventional methods for measuring surface tension and viscosity can readily be applied.

For example, various exemplary experimental methods for determining surface tension are discussed in A. W. Adamson's *Physical Chemistry of Surfaces,* 2nd. edition, Interscience, 1967. Among these known methods is the capillary rise method, whereby the height to which a liquid rises in a capillary is observed, the wall of the capillary being wetted with the liquid. Other exemplary methods include the drop weight method, the Wilhelmy plate method and the du Nouy ring method.

With regard to viscosity, various experimental techniques for determining the viscosities of molten polymers are discussed in *Principles of Polymer Systems,* by F. Rodriquez, McGraw-Hill, 1970 and *Properties and Structure of Polymers,* by A. V. Tobolsky, John Wiley, 1960. Methods employing rotational viscometry techniques are generally preferred, e.g. using a Brookfield Synchro-Lectric Viscometer, manufactured by Brookfield Engineering Laboratories, Inc., Stoughton, Massachusetts.

By employing a polymer exhibiting the required properties of surface tension and viscosity such that it has a ratio of surface tension to viscosity of at least 1:50 (2:1), more preferably of at least 1:20 (5:1) and most preferably of at least 1:6.25 (8:1), at some point in the range of from 140°C to 200°C, an extremely fast erasure rate is ensured, e.g. up to about $10^6$ bits/sec or more. Such a high erasure rate is extremely important for commercial discs in order to ensure that proper and complete erasure of the information is attained when desired in a very short time and in an easy manner. Without such a capability for a quick, easy and accurate erasure the technical aspects and hence commercial viability of the product would be adversely affected.

Moreover, the ability of the polymer to have such a surface tension to melt viscosity ratio in the low temperature range of from 140 to 200°C, and most preferably from 150 to 180°C, essentially precludes the possibility of writing during erasure since the erasure levelling occurs at a temperature well below the thermal degradation (or writing) temperature. Advantageously, the expenditure of energy for erasure is also of a relatively limited nature due to the capability of erasure of recorded information at such a low temperature. Yet, the erasure temperature for the recording medium of the present invention is still thereby sufficiently above normal ambient temperatures for recorded information not to be inadvertently erased by levelling upon storage or upon scanning with a low intensity read laser beam.

Generally, it is preferred that the polymer exhibit a melt viscosity of about 0.5 Pa.s (5 poise) at some point within the temperature range of 140°C to 200°C. Accordingly the polymer film should exhibit a surface tension of at least $10^{-2}$ N/m (10 dynes/cm), and more preferably at least 2.5 × $10^{-2}$ (25 dynes/cm), in order to achieve the desired erasure and erasure rates, which would be achieved at the temperature(s) that the polymer film exhibits a viscosity of 0.5 Pa.s (5 poise). It should be understood that the polymer film need not exhibit the prerequisite surface tension to viscosity ratio throughout the entire defined temperature range, but only at some point therein.

The temperature for the onset of thermal degradation, for example, as measured by thermogravimetric analysis and defined for the purposes of the present invention as that temperature at which a sample loses 10 percent of its original weight is at least 250°C for the polymer employed in the recording medium of the present invention. More preferably the temperature of thermal degradation is at least 300°C. Generally it is no greater than 500°C. Accordingly, the thermal degradation temperature of the polymer sufficiently exceeds the erasure temperature range, e.g., up to 200°C, so that no writing occurs during the erasure of information. This is also a very important aspect of the polymer employed in the recording medium of the present invention, for if the temperature at which erasure can occur is too close to the thermal degradation temperature, problems with respect to the ease and completeness of the erasure would be encountered.

The polymer film should also preferably undergo thermal degradation with a minimum amount of charring or with a minimal amount of residue being left, e.g., about 2% or less. This allows the erasable recording medium surface to remain free of extraneous debris, etc. throughout the various erasure-recording sequences to which the recording medium may be subjected. Being free of debris thereby results in less scattering of light and less noise, i.e., a higher signal to noise ratio is achieved. The technical properties of the recording medium are thereby more acceptable and commercially viable.

In this same vein, it is desirable that the polymer used in the recording layer be optically homogeneous and that it does not scatter light. The more optically homogeneous, the better the technical parameters, e.g., higher resolution and/or information density, of the recording medium. It is also preferred that the polymer itself and its thermal degradation products be non-toxic.

Examples of suitable polymeric materials for use in the erasable recording medium of the present invention include, but are not limited to, lower molecular weight dimer acid polyamides. Such dimer acid polyamides are commercially available, e.g., from Union Camp Corporation under the Trade Mark Uni-Rez, and from Emery Industries, Inc. under the Trade Mark Emerez. Such low molecular weight dimer acid polyamides have hitherto been used as hot melt adhesives and in printing inks.

The substrate of the erasable recording medium of the present invention to which the polymer is applied is illustratively, and preferably, formed in the shape of a disc, a major surface of which is processed to be polished and flat. The substrate is made of a thermally stable material, which is also mechanically rigid and dimensionally stable and which ideally has an isotropically low coefficient of thermal expansion. Therefore, the recording medium does not warp during storage, writing, erasure or reading.

Depending upon the particular, conventional read mechanism employed, the substrate may be opaque, transparent or highly reflective regarding the reading laser beam. It is also preferred that the substrate material be compatible with the polymer employed and that the polymer adhere well to the substrate. Good adhesion, for example, may be defined operationally as the inability to remove the coating from the substrate by means of adhesive tape, e.g. Scotch (Trade Mark) brand tape. Examples of suitable materials for the substrate include glass and polymethylmethacrylate.

If the polymer employed in the recording film is transparent at the predetermined wavelength of the laser output for writing, it is generally necessary to add a minor amount of a dye of appropriate absorption wavelength to the polymer in order to effect absorption of the incident radiation. If, for example, the writing is to be achieved with a helium-neon laser of 633 nm, then Oil Blue N dye, *Colour Index* 61555, $\lambda_{max}$ 637 nm, would be a suitable dye for incorporation into the polymer film. If, however, an argon laser is used which provides an output of a wavelength of about 458 nm, an organic dye such as fluorescein, which is highly absorptive at the light frequency of the argon laser, can advantageously be used. Other dyes which may be used include certain nigrosine dyes. Of course, it is preferred to employ dyes of suitable properties so as not to detrimentally affect the recordability and erasability of the recording medium.

The erasable recording medium of the present invention is prepared by coating the substrate with a film of the polymer, or the polymer and the dye. Since the read, write and erase steps all require operating within a very narrow depth of focus, the film, when applied, must provide a very flat surface in order to avoid errors and noise. In order to facilitate the coating procedure, it is also generally advantageous that the polymer (and dye) be soluble in an organic solvent, such as an alcohol or ketone. In this regard, when a dye is used, the polymer and dye should be compatible and mutually co-soluble. Also, upon evaporation of the solvent, the dye should not precipitate in a particulate form, which particulates would cause a scattering of light.

Any suitable coating technique may be used to achieve such a flat surface, with a conventional technique such as spin coating, which allows for a high degree of control of film thickness and flatness being preferred. It is, of course, important that the polymer form a thin membrane coating.

In an illustrative recording system embodying the principles of the present invention a record blank of the above-described (disc) form is subject to rotation at a constant linear or constant angular velocity while a beam of light from a light source, e.g. a laser, is focused on the polymer surface of the disc. The intensity of the light beam is controlled in accordance with information to be recorded. Illustratively, the control is effected in accordance with carrier waves modulated in frequency by picture-representative video signals, with the light beam intensity varying as a result between a high level sufficient to effect ablation of the absorptive material and a low level insufficient to effect such ablation, the frequency of the level alternations varying as the video signal amplitude changes. Preferred writing speeds are in the range of from $10^6$ to $10^7$ bits per second.

The relative diameter and depth of the holes or pits formed by ablation will, of course, depend not only on the optical and thermal properties of the polymer or polymer/dye layer, but also on the characteristics of the writing beam, i.e. focused spot diameter, depth of focus, intensity profile and intensity and duration of the writing pulse. Methods of optimising these parameters are familiar to those skilled in the art. It is preferred, however, that ablation of the polymer layer does not proceed as far as the substrate layer. If ablation is to proceed to the substrate, the substrate material employed is preferably glass or a metallised substrate, e.g., a substrate having a metallic surface, or some other high surface energy substrate material.

As a result of the ablation of the polymeric material, an information track comprising a succession of spaced pits may be formed in the polymer surface of the disc, the pits appearing in those surface regions exposed to the high intensity beam due to vaporisation of the polymer layer material in response to the high intensity beam exposure. Variations in the length and separation of the pits are representative of the recorded information. Where a continuous sequence of pictures is to be recorded, a spiral information track may be formed by providing relative motion, in a radial direction and at a constant rate during the recording, between the recording beam and the rotating disc. Alternatively, in the absence of such relative motion during the recording, a circular information track may be formed appropriate for "slide" or freeze frame recording purposes.

The result of the above-described recording process is the formation of an information record of a form which facilitates recovery of the recorded information by optical playback processes. The information track of such an information record comprises (1) undisturbed surface regions alternating with (2) pit regions formed by the ablation process, due to complete, or at least partial, removal of the polymer layer coating of the substrate. This information track can be, for example, in either analogue or digital form.

In playback or read operations pursuant to the principles of the present invention, a light beam is focused upon the information track of a rotating information record of the above-described type. The playback beam has a constant intensity at a level insufficient to effect ablation of the polymer layer or erasure of the recorded information by levelling. A photodetector, positioned to receive light reflected from the successive regions of the information track as they pass through the path of the focused light, develops a signal representative of the recorded information.

Several variations in the playback or reading system are possible with the erasable recording medium of the present invention. For example, the information can be read based upon the relative reflection from the surface of the polymer or polymer/dye layer of the disc. In this mode, when a beam from the read laser is focused on the surface of the disc a part of the light is absorbed, but a fraction of the light is reflected. The reflected rays retrace their path back through a lens and are directed by a beamsplitter to a photodetector. When the read beam encounters a hole or pit created during the writing step, however, the rays are scattered and a lower intensity is reflected back towards the detector. Thus, a written bit is registered as a decrease in reflected intensity. Alternatively, the read beam can be focused at a level corresponding to the depth of the ablated hole (as predetermined), so that a bit is registered as an increase in reflected intensity. The chief function of the substrate in either of the aforediscussed modes is to provide mechanical support for the active layer since the substrate's reflectivity or transparency does not come into play. The substrate is preferably of a transparent nature when used in conjunction with such a playback system.

Information can also be read via a system attuned to the relative reflectance from the surface of the substrate. In this mode, the substrate must be of a reflective nature in the appropriate wavelength range. For example, the substrate can have a metallised surface, e.g. of aluminum, upon which the polymer is deposited. In operation, the read laser is focused on the highly reflective surface. In the unwritten portions of the medium, i.e., those having no pits, a part of the incident beam is absorbed upon going through the polymer/dye layer and that part which is reflected from the surface does not retrace its path to thereby be detected by a photodetector. In the recorded portions of the medium, however, i.e. those having the pits formed by ablation, the beam goes through a shorter distance of absorbing layer, and is reflected from the substrate reflective surface, so that a bit is registered as an increase in reflected intensity.

The read mode can also be adjusted to read in accordance with relative reflectance from the surface of the polymer layer and from the surface of the substrate. Again, the substrate, when employing this mode, should be reflective. This concept or mode is described by D. G. Howe and J. J. Wrobel in *J. Vac. Sci. Technol., 18,* 92 (1981). See also U.S. Patent No. 4,097,895.

When employing this mode, the recording medium should comprise a dyed polymer layer of a precise thickness which is coated onto a reflective, e.g. metallised, substrate. Writing is done at a wavelength where the dye absorbs and reading at a wavelength where the dye is transparent. In the read step, reflection occurs both from the surface of the dyed polymer and from the surface of the metallised substrate, and these reflections can combine either constructively or destructively at the surface of the polymer coating. If the thicknesses of the initial coating and of the coating remaining in the ablated hole are chosen correctly, then the combination is destructive in the unwritten areas and constructive in the ablated areas, so that a bit is registered as an increase in the intensity of reflected light.

Information can also be read, for example, based upon light transmission through the disc. In such a playback system, it is necessary for the substrate to be transparent. A recorded bit is registered as an increase in intensity of the light transmitted through the disc since there is less absorbing dye in the path of the beam where the dye/polymer layer material has been ablated.

Due to the particular selected properties exhibited by the polymers comprising the polymer layer of the recording medium of the present invention, complete and accurate erasure of recorded information can readily and easily be accomplished. Erasure of the recorded information is readily carried out by heating the medium to a sufficiently high temperature for the dye/polymer layer to become fluid and the surface to be levelled by surface tension forces, i.e. in the temperature range from 140 to 200°C. This may be done globally by heating the entire medium (e.g. a disc) in an oven or some other suitable heating means, or by means of a laser beam whose intensity is intermediate between that of the write beam and read beam. It is generally necessary to heat an area considerably greater than that of a single bit (typically 1 μm in diameter), so that addressable (bit-by-bit) erasure can be difficult.

## Claims

1. An ablative recording medium, suitable for use with a recording laser, comprising a thermally stable substrate and a recording polymer layer coated thereon, characterised in that the recording polymer layer comprises a polymer having the following combination of properties:
   (i) a Vicat softening point of 45 to 120°C;
   (ii) a surface tension, measured in N/m (dynes.cm), and a melt viscosity, measured in Pa.s (poise), in the temperature range from 140 to 200°C such that the ratio of said surface tension to melt viscosity at some point within said temperature range is at least 1:50 (2:1); and
   (iii) a temperature for the onset of thermal degradation of at least 250°C.

2. The recording medium of claim 1, wherein the Vicat softening point of the polymer is in the range from 50 to 100°C.

3. The recording medium of claim 2, wherein the Vicat softening point of the polymer is in the range from 60 to 80°C.

4. The recording medium of any of claims 1—3, wherein the onset of thermal degradation temperature is at least 300°C.

5. The recording medium of any of claims 1—4, wherein the surface tension, measured in N/m (dynes/cm), and viscosity, measured in Pa.s (poise), exhibited by the polymer are such that there is a ratio of surface tension to viscosity at some point in the temperature range from 140 to 200°C which is at least 1:20 (5:1).

6. The recording medium of claim 1 or 5, wherein the said point is in the temperature range from 150 to 180°C.

7. The recording medium of any of claims 1—6, wherein the polymer comprising the polymer layer is soluble in organic solvents but insoluble in water, is optically homogeneous and non-scattering of light, and adherent to the substrate.

8. The recording medium of any of claims 1—7, wherein said polymer layer coated on the substrate further comprises a dye material which is absorptive at the frequency of the recording laser.

9. The recording medium of any of claims 1—8, wherein the substrate comprises glass or polymethylmethacrylate.

10. The recording medium of any of claims 1—9, wherein the substrate has a top layer adjacent the polymer layer which is a metallised reflective layer to thereby render the substrate reflective.

11. The recording medium of any of claims 1—10, wherein the substrate is transparent.

12. The recording medium of any of claims 1—11, wherein the recording medium is in the form of a disc.

13. An optically readable and erasable information disc being the recording medium of claim 12, wherein the polymer layer constitutes an information track comprising an array of spaced pits.

14. An erasable information medium, useful with playback apparatus employing a playback beam of light of a predetermined frequency, said medium comprising an ablative recording medium according to any one of claims 1 to 11 having an information track comprising a succession of pits formed in said polymer layer, wherein the thickness of said polymer layer in all regions of the substrate has a light reflective surface; and the information medium other than those occupied by said pits has a given thickness chosen such that, when reflection occurs both from the surface of said polymer layer and the reflective surface of the substrate, these reflections combine destructively at the surface of the polymer layer.

15. A method or recording information in a thin film deposited on a relatively thick substrate by irradiating the film with a laser beam in accordance with said information to form pits in the film, characterised in that the film comprises a polymer as defined in any of claims 1—7.

16. A method of erasing a deformation information pattern applied to the recording medium of any of claims 1—14 which comprises heating the polymer layer to erase the deformation pattern.

17. The method of claim 16, wherein the polymer layer is heated to a temperature in the range from 140 to 200°C sufficient to effect levelling of the polymer layer.

18. The method of claim 16 or 17, wherein the polymer layer is heated during erasure to a temperature at least 50°C below the temperature used in recording the information.

**Patentansprüche**

1. Reversibles Aufzeichnungsmedium, das für den Einsatz mit einem aufzeichnenden Laser geeignet ist, umfassend ein thermisch stabiles Substrat und darauf aufgetragen eine Schicht eines aufzeichnenden Polymers, dadurch gekennzeichnet, daß die Schicht des aufzeichnenden Polymers ein Polymer mit der folgenden Kombination von Eigenschaften umfaßt:

(i) einen Vicat-Erweichungspunkt von 45°C bis 120°C;

(ii) eine solche Oberflächenspannung, gemessen in N/m (dyn/cm), und eine solche Schmelzviskosität, gemessen in Pa.s (Poise), im Temperatur-Bereich von 140°C bis 200°C, daß das Verhältnis der Oberflächenspannung zu der Schmelzviskosität an einem Punkt innerhalb des gennanten Temperatur-Bereichs wenigstens 1:50 (2:1) beträgt, und

(iii) eine Temperatur für den Beginn des thermischen Abbaus von wenigstens 250°C.

2. Aufzeichnungsmedium nach Anspruch 1, worin der Vicat-Erweichungspunkt des Polymers im Bereich von 50°C bis 100°C liegt.

3. Aufzeichnungsmedium nach Anspruch 2, worin der Vicat-Erweichungspunkt des Polymers im Bereich von 60°C bis 80°C liegt.

4. Aufzeichnungsmedium nach irgendeinem der Ansprüche 1 bis 3, worin die Temperatur für den Beginn des thermischen Abbaus wenigstens 300°C beträgt.

5. Aufzeichnungsmedium nach irgendeinem der Ansprüche 1 bis 4, worin das Polymer eine solche Oberflächenspannung, gemessen in N/m (dyn/cm), und eine solche Schmelzviskosität, gemessen in Pa.s (Poise), zeigt, daß das Verhältnis der Oberflächenspannung zu der Schmelzviskosität an einem Punkt innerhalb des Temperatur-Bereichs von 140°C bis 200°C wenigstens 1:20 (5:1) beträgt.

6. Aufzeichnungsmedium nach irgendeinem der Ansprüche 1 bis 5, worin der gennante Punkt im Temperatur-Bereich von 150°C bis 180°C liegt.

7. Aufzeichnungsmedium nach irgendeinem der Ansprüche 1 bis 6, worin das die Polymer-Schicht, umfassende Polymer in organischen Lösungsmitteln, löslich, jedoch in wasser unlöslich ist, optisch homogen ist und das Licht nicht streut und an dem Substrat haftet.

8. Aufzeichnungsmedium nach irgendeinem der Ansprüche 1 bis 7, worin die auf das Substrat aufgetragene Polymer-Schicht weiterhin ein Farbstoff-Material umfaßt, das bei der Frequenz des aufzeichnenden Lasers absorbiert.

9. Aufzeichnungsmedium nach irgendeinem der Ansprüche 1 bis 8, worin das Substrat Glas oder Polymethylmethacrylat umfaßt.

10. Aufzeichnungsmedium nach irgendeinem der Ansprüche 1 bis 9, worin das Substrat eine der Polymer-Schicht benachbarte obere Schicht hat, die eine metallisierte reflektierende Schicht ist und dadurch das Substrat reflektierend macht.

11. Aufzeichnungsmedium nach irgendeinem der Ansprüche 1 bis 10, worin das Substrat transparent ist.

12. Aufzeichnungsmedium nach irgendeinem der Ansprüche 1 bis 11, worin das Aufzeichnungsmedium die Form einer Scheibe hat.

13. Optisch lesbare und löschbare Informations-Scheibe, die das Aufzeichnungsmedium nach Anspruch 12 ist, worin die Polymer-Schicht eine Informationsspur bildet, die eine Anordnung von in Abständen zueinander vorliegender Vertiefungen umfaßt.

14. Löschbares Informations-Medium, das verwendbar ist mit einem Abspielgerät, das einen Lese-Lichtstrahl einer voreingestellten Frequenz verwendet, wobei das medium ein reversibles Aufzeichnungsmedium nach irgendeinem der Ansprüche 1 bis 11 mit einer Informationsspur aus einer Folge von Vertiefungen umfaßt, die in der Polymer-Schicht gebildet sind, wobei das Substrat eine licht-reflektierende Oberfläche besitzt und die Dicke der Polymer-Schicht in allen Bereichen des Informationsmediums, mit Ausnahme derjenigen, die von den Vertiefungen eingenommen werden, eine gegebene Dicke aufweist, die so gewählt ist, daß bei Auftreten einer Reflexion sowohl von der Oberfläche der Polymer-Schicht als auch von der reflektierenden Oberfläche des Substrats diese Reflexionen sich an der Oberfläche der Polymer-Schicht destruktiv kombinieren.

15. Verfahren zur Aufzeichnung von Information in einem dünnen Film, der auf einem relativ dicken Substrat abgelagert ist, durch Bestrahlen des Films mit einem der Information entsprechenden Laser-Strahl, wodurch Vertiefungen in dem Film gebildet werden, dadurch gekennzeichnet, daß der Film ein Polymer nach irgendeinem der Ansprüche 1 bis 7 umfaßt.

16. Verfahren zum Löschen eines auf dem Aufzeichnungsmedium nach irgendeinem der Ansprüche 1 bis 14 aufgebrachten Deformations-Informationsmusters, umfassend das Erhitzen des Polymers zum Löschen des Deformations-Informationsmusters.

17. Verfahren nach Anspruch 16, worin die Polymer-Schicht auf eine Temperatur im Bereich von 140°C bis 200°C erhitzt wird, um das Verlaufen des Polymers zu bewirken.

18. Verfahren nach den Ansprüchen 16 oder 17, worin die Polymer-Schicht während des Löschens auf eine Temperatur von wenigstens 50°C unterhalb der bei der Aufzeichnung der Information verwendeten Temperatur erhitzt wird.

## Revendications

1. Matériel d'enregistrement par ablation, approprié à une utilisation avec un laser d'enregistrement, comprenant un substrat thermiquement stable et une couche d'un polymère d'enregistrement qui y est enduite, caractérisé en ce que la couche du polymère d'enregistrement comprend un polymère ayant la combinaison suivante de propriétés:
(i) un point d'amollissement Vicat de 45 à 120°C;
(ii) une tension de surface, mesurée en N/m (dynes/cm) et une viscosité en phase fondue, mesurée en Pa.s (poise), dans la plage de températures de 140 à 200°C, telles que le rapport de ladite tension de surface à la viscosité en phase fondue en un certain point dans ladites plage de températures soit d'au moins 1:50 (2:1); et
(iii) une température pour le départ de la dégradation thermique d'au moins 250°C.

2. Matériel d'enregistrement selon la revendication 1, où le point d'amollissement Vicat du polymère est compris entre 50 et 100°C.

3. Matériel d'enregistrement selon la revendication 2, où le point d'amollissement Vicat du polymère est compris entre 60 et 80°C.

4. Matériel d'enregistrement selon l'une quelconque des revendications 1—3, où la température pour le départ de dégradation thermique est d'au moins 300°C.

5. Matériel d'enregistrement selon l'une quelconque des revendications 1—4, où la tension de surface, mesurée en N/m (dynes/cm) et la viscosité, mesurée ne Pa.s (poise), présentées par le polymère, sont telles qu'il y ait un rapport de la tension de surface à la viscosité, en un certain point dans la plage de températures de 140 à 200°C, qui est d'au moins 1:20 (5:1).

6. Matériel d'enregistrement de la revendications 1 ou 5, où ledit point est dans la plage de températures de 150 à 180°C.

7. Matériel d'enregistrement selon l'une des revendications 1—6, où le polymère formant la couche du polymère est soluble dans des solvants organiques mais insoluble dans l'eau, est optiquement homogène et ne disperse pas la lumière et adhère au substrat.

8. Matériel d'enregistrement selon l'une quelconque des revendications 1—7, où ladite couche de polymère enduite sur le substrat comprend de plus un matériau colorant qui est absorbant à la fréquence du laser d'enregistrement.

9. Matériel d'enregistrement selon l'une quelconque des revendications 1—8, où le substrat comprend du verre ou du polyméthylméthacrylate.

10. Matériel d'enregistrement selon l'une quelconque des revendications 1—9, où le substrat a une couche supérieure adjacente à la couche de polymère qui est une couche réfléchissante métallisée pour ainsi rendre le substrat réfléchissant.

11. Matériel d'enregistrement selon l'une quelconque des revendications 1—10, où le substrat est transparent.

12. Matériel d'enregistrement selon l'une quelconque des revendications 1—11, où le matériel d'enregistrement a la forme d'un disque.

13. Disque optiquement lisible et effaçable de l'information qui est le support de l'enregistrement de la revendication 12, où la couche du polymère constitue une piste de l'information comprenant une série de trous espacés.

14. Matériel d'information effaçable, utile avec un appareil de restitution employant un faisceau de lumière de restitution d'une fréquence prédéterminée, ledit matériel comprenant un matériel d'enregistrement par ablation selon l'une quelconque des revendications 1 à 11 ayant:

une piste de l'information comprenant une succession de trous formés dans ladite couche du polymère où le substrat a une surface réfléchissant la lumière; et l'épaisseur de la couche du polymère dans toutes les régions du matériel d'information, autres que celles occupées par lesdits trous a une épaisseur donnée choisie de manière que lorsqu'une réflexion se produit à la fois par la surface de ladite couche de polymère et la surface réfléchissante du substrat, ces réflexions se combinent par destruction à la surface de la couche du polymère.

15. Méthode d'enregistrement de l'information dans un film mince déposé sur un substrat relativement épais par irradiation du film par un faisceau laser selon ladite information pour former des trous dans le film, caractérisée en ce le film comprend un polymère tel que défini selon l'une quelconque des revendications 1—7.

16. Méthode d'effacement d'un schéma d'information par déformations appliquée au matériel d'enregistrement selon l'une quelconque des revendications 1—14 qui consiste à chauffer la couche du polymère pour effacer le schéma de déformations.

17. Méthode de la revendication 16, où la couche du polymère est chauffée à une temperature comprise entre 140 et 200°C, suffisante pour effectuer un nivelage de la couche du polymère.

18. Méthode de la revendication 16 ou 17, où la couche du polymère est chauffée pendant l'effacement jusqu'à une température au moins 50°C en-dessous de la température utilisée pour l'enregistrement de l'information.